# EUROPEAN PATENT APPLICATION

(11) **EP 4 597 919 A1**
(43) Date of publication of application: **06.08.2025**
(21) Application number: 24155082.1
(22) Date of filing: 31.01.2024
(51) Int. Cl.: H04L 9/08, H04L 9/14, H04L 9/40

(54) **A METHOD OF RELAYING A KSA KEY WITHIN A QKDN**

(71) Applicant: Deutsche Telekom AG, 53113 Bonn (DE); Rohde & Schwarz GmbH & Co. KG, 81671 München (DE)
(72) Inventor: GUNKEL, Matthias, 64291 Darmstadt (DE); RÖHRICH, Stefan, 10437 Berlin (DE)
(74) Representative: RDL Patentanwälte PartG mbB

(57) **Abstract**

A method of relaying a key supply agent, KSA, key within a quantum key distribution, QKD, network, QKDN, wherein, controlled by a QKDN controller of the QKDN, a source QKD node of a QKDN transmits a KSA key as a source cipher via the QKDN to a target QKD node of the QKDN and the target QKD node receives the KSA key as a target cipher, the QKDN converting the source cipher into the target cipher; a QKDN central ciper converter, CCC, for a QKDN, a QKDN, a QKDN system and a computer program product.

## Description

The invention relates to a method of relaying a key supply agent, KSA, key within a quantum key distribution, QKD, network, QKDN, wherein, controlled by a QKDN controller of the QKDN, a source QKD node of a QKDN transmits a KSA key as a source cipher via the QKDN to a target QKD node of the QKDN and the target QKD node receives the KSA key as a target cipher, the QKDN converting the source cipher into the target cipher. The invention further relates to a QKDN central cipher collector, CCC, for a QKDN, a QKDN controller for a QKDN, a QKDN, a QKDN system and a computer program product.

Methods of the above-mentioned type form part of the state of the art in different embodiments and are used to relay, i.e., forward a KSA key between QKD nodes of the QKDN. For instance, the specification ITU-T Y.3803 "Quantum key distribution networks - Key management" published in December 2020 describes alternative ways for relaying a KSA key within a QKDN.

The KSA key is used to encrypt payload data to be transmitted via a communication network and decrypt the transmitted payload data, the communication network being different and separate from the QKDN. QKD nodes of the QKDN may be linked to nodes of the communication network one-to-one, each linked node of the communication network comprising a cryptographic application for encrypting and decrypting the payload data. The respective KSAs of the transmitting QKD node and the receiving QKD node provide the linked nodes of the communication network with the KSA key, thus, allowing for transmitting encrypted the payload data. Relaying the KSA key, strictly speaking a copy of the KSA key, allows the QKDN for providing two linked nodes of the communication network with an end-to-end, E2E, key relation.

While encrypting and decrypting payload data is a preferred use case of the invention encryption and decryption of payload data are not covered by the invention. Hence, the nodes of the communication network and encrypted transmission of payload data is also omitted from the explicit disclosure.

Herein, the transmitting QKD node is called the source QKD node while the receiving QKD node is called the target QKD node. The source QKD node and the target QKD node may also be called Alice node and Bob node, respectively. The target QKD node is connected to the source QKD node via a relaying path within the QKDN, the relaying path comprising at least one and generally a plurality of subsequent further QKD nodes of the QKDN, the further QKD nodes being different from both the source QKD node and the target QKD node and referred to as transit QKD nodes herein. The relaying path shall be understood to also comprise the source QKD node and the target QKD node.

It is noted that the terms "source QKD node", "transit QKD node" and "target QKD node" indicate different roles of a QKD node involved in relaying the KSA key while a technical configuration of the involved QKD nodes, and particularly all QKD nodes of the QKDN may be at least substantially identical. Each QKD node may be involved in relaying a KSA key as a source QKD node, a transit QKD node or a target QKD node.

Of course, the KSA key is relayed encrypted, i.e., securely transmitted and received as respective ciphers, a cipher usually being created by a key management agent, KMA, of the QKD node by xoring the KSA key to be transmitted with a key management agent, KMA, key. The cipher may also be referred to as a mask. Xoring a key or a cipher with a key or a cipher means calculating a bitwise "exclusive or", XOR, combination of the respective keys and/or ciphers. Thus, the KSA key is not relayed in plain text between successive cipher conversions and is, hence, protected from being fraudulently accessed by an attacker when being relayed.

The KMA key is a secret shared by exactly two QKD nodes of the QKDN, i.e., the two QKD nodes exclusively have respective copies of the generated KMA key. Hence, the KMA key may be referred to as a shared secret of the two QKD nodes. Each KMA key originally is generated by two adjacent QKD nodes, i.e., two QKD nodes linked immediately in cooperation. Respective QKD modules of the two QKD nodes quantum-mechanically generate the KMA key in the usual way. Thus, the KMA key may be referred to as a quantum key. While generating the KMA key is a prerequisite for the invention generation of KSA keys is well known and not covered by the invention. Hence, QKD modules and generation of KMA keys are omitted from the explicit disclosure.

The KSA key may also be a quantum key cooperatively generated by respective QKD modules of exactly two adjacent QKD nodes and, hence, also a shared secret. However, the KSA key may be generated differently and/or be received by the source QKD node.

It is noted that the KSA key may be readily obtained by an attacker having entered a transit QKD node of the relaying path, e.g., an intruder of the transit QKD node as the transit QKD node receives the KSA key as a cipher, i.e., xored with a KMA key of a shared secret and, additionally, provides the KMA key of the shared secret. Thus, the intruder may simply recover the KSA key by xoring the received cipher with the provided KMA key. As a consequence, each QKD node of the QKDN has to be configured as a trusted node protected from attackers by particular constructive measures.

The known methods, however, lack an operational flexibility in relaying KSA keys within the QKDN, i.e., the way how KSA keys are relayed withing the QKDN, and/or require a high implementational effort for the QKDN.

It is, therefore, an object of the invention to suggest a method of relaying a KSA key within a QKDN which allows for relaying the KSA key more flexibly and for implementing the QKDN more economically. Other objects of the invention are to provide a QKDN CCC for a QKDN, a QKDN controller for a QKDN, a QKDN, a QKDN system and a computer program product.

A first aspect of the invention is a method of relaying a key supply agent, KSA, key within a quantum key distribution, QKD, network, QKDN, wherein, controlled by a QKDN controller of the QKDN, a source QKD node of a QKDN transmits a KSA key as a source cipher via the QKDN to a target QKD node of the QKDN and the target QKD node receives the KSA key as a target cipher, the QKDN converting the source cipher into the target cipher. Each of the source cipher and the target cipher comprises the KSA key encrypted. Converting the source cipher into the target cipher may comprise a plurality of successive cipher conversions resulting in a corresponding sequence of transmitted ciphers wherein the first transmitted cipher is the source cipher and the last transmitted cipher is the target cipher. Intermediate transmitted ciphers may or may not comprise the KSA key encrypted,

According to the invention, converting the source cipher into the target cipher comprises at least two cipher conversions, the at least two cipher conversions comprising an in-path cipher conversion carried out by a transit QKD node of a relaying path within the QKDN, the relaying path connecting the target QKD node to the source QKD node, and an off-path cipher conversion carried out by a QKDN central cipher collector, CCC, instead of the transit QKD node. In other words, a cipher conversion path corresponding to the relaying path is hybrid. At least one cipher conversion is carried out by a transit QKD node and at least one conversion step is carried out by the QKDN CCC. A single cipher conversion may be referred to as a cipher conversion hop.

The relaying path may be considered a straight path comprising QKD nodes only, while the cipher conversion path may be considered a bypassing path comprising the QKDN CCC. Both the straight path and the bypassing path define a coincident relaying direction. The QKDN may provide a plurality of different relaying paths connecting the target QKD node to the source QKD node already allowing for a flexibility in relaying the KSA key. The hybrid cipher conversion path allows for an even higher flexibility in relaying the KSA key.

Apart from that, QKD nodes of the QKDN may be intentionally excluded from being a transit QKD node as the QKDN CCC may be configured to carry out the cipher conversion instead of the transit QKD node. As a consequence, the excluded transit QKD node is not required to be configured as a trusted node which reduces an effort for initially implementing the QKDN. Initially, the QKDN may be implemented with a plurality of QKD nodes not configured as trusted nodes and, correspondingly, the QKDN CCC may be configured to take up the cipher conversions to be carried out by these QKD nodes. After the initial implementation, the QKD nodes may be gradually configured as trusted nodes and, correspondingly, the QKDN CCC may be released from taking up the cipher conversions to be carried out by each QKD node recently configured as a trusted node. Thus, the hybrid cipher conversion path allows for reducing the initial implementation effort of the QKDN.

Additionally, QKD nodes may be permanently excluded from being a transit QKD node. For instance, QKD nodes immediately linked exactly to two adjacent QKD nodes, i.e., not allowing the relaying path to branch, and only required for spanning large distances due to the cooperative generation of quantum keys being spatially limited need not at all be configured as trusted nodes. Thus, the hyprid cipher conversion path also allows for reducing the final implementation effort of the QKDN.

In an embodiment, the QKDN CCC, in the off-path cipher conversion, receives the KSA key as an input cipher from a QKD node of the relaying path immediately preceding the transit QKD node, creates an output cipher by xoring the received input cipher with a transit cipher provided by a cipher storage of the QKDN CCC and received from the transit QKD node and transmits the created output cipher to a QKD node of the relaying path immediately following the transit QKD node. The terms "immediately preceding" and "immediately following" refer to the relaying direction. The QKDN CCC takes the place of the transit QKD node, i.e., the cipher conversion path bypasses the transit QKD node and, hence, the cipher conversion path deviates from the relaying path at the transit QKD node.

Moreover, the KSA key is not recovered by the QKDN CCC when converting the input cipher into the output cipher as the QKDN CCC carries out the cipher conversion all in one, i.e., the QKDN CCC does not have the KSA key in plain text which provides the QKDN CCC with a high security. As the QKDN CCC does not have or receive KMA keys the QKDN CCC is principally excluded from recovering the KSA key.

In case the source QKD node immediately precedes the transit QKD node, the input cipher is the source cipher. In case the target QKD node immediately follows the transit QKD node, the output cipher is the source cipher.

A KMA of the transit QKD node may create the transmitted transit cipher by xoring a KMA key provided by a key storage of the KMA and shared with the immediately preceding QKD node with a KMA key provided by the key storage and shared with the immediately following QKD node. As the transit cipher is created by the transit QKD node and exclusively transmitted to the QKDN CCC the QKDN CCC does not have the KMA key shared with the immediately preceding QKD node. Thus, an intruder accessing the QKDN CCC cannot recover the KSA key by xoring which further increases the security of the QKDN CCC.

Preferably, the transit QKD node transmits the transit cipher to the QKDN CCC in advance without a time relation to the transmitted KSA key and the QKDN CCC stores the received transit cipher in the cipher storage until the central cipher conversion is carried out. The QKDN CCC is released from requesting and receiving the transit cipher from the transit QKD node when the KSA key is relayed. Rather can the QKDN CCC carry out the cipher conversion immediately when the KSA key is relayed which reduces a time interval between transmitting the source cipher and receiving the target cipher, i.e., a latency of relaying the KSA key.

Advantageously, converting the source cipher into the target cipher comprises a plurality of conversions comprising a plurality of successive in-path cipher conversions and/or a plurality of successive off-path cipher conversions when the relaying path comprises a plurality of transit QKD nodes. For short, the cipher conversion path may comprise at least one partial cipher conversion path involving more than one subsequent transit QKD nodes or the QKDN CCC instead of more than one subsequent transit QKD nodes.

The QKDN CCC may create the transit cipher as a multi-hop transit cipher by xoring a sequence of transit ciphers provided by the cipher storage and received from a plurality of subsequent transit QKD nodes of the relaying path. The multi-hop transit cipher facilitates creating the output cipher.

Preferably, the QKDN CCC creates the multi-hop transit cipher in advance without a time relation to the transmitted KSA key and the QKDN CCC stores the created multi-hop transit cipher in the cipher storage until the central cipher conversion is carried out. The QKDN CCC is released from sequentially xoring with transit ciphers when the KSA key is relayed. Rather can the QKDN CCC carry out the partial cipher conversion immediately when the KSA key is relayed which further reduces a time interval between transmitting the source cipher and receiving the target cipher, i.e., a latency of relaying the KSA key. Of course, the creation of the multi-hop transit cipher is particularly favorably for but not restricted to subsequent transit QKD nodes linked exactly to two adjacent QKD nodes, i.e., non-branching QKD nodes.

In another embodiment, each transit QKD node, in the in-path cipher conversion, receives the KSA key as an input cipher from a QKD node of the relaying path immediately preceding the transit QKD node, a KMA of the transit QKD node, recovers the KSA key from the received input cipher by xoring the received input cipher with a KMA key provided by a key storage of the KMA and shared with the immediately preceding QKD node, creates an output cipher by xoring the recovered KSA key with a KMA key provided by the key storage of the KMA and shared with a QKD node of the relaying path immediately following the transit QKD node and transmits the created output cipher to the immediately following QKD node.

Alternatively, the KMA may not recover the KSA key from the received input cipher but first create a transit cipher by xoring the KMA key shared with the immediately preceding QKD node with the KMA key shared with the immediately following QKD node and create the output cipher by xoring the received input cipher with the created transit cipher. Nonetheless, each transit QKD node carrying out a cipher conversion has to be configured as a trusted node protected from attackers by particular constructive measures.

A key management agent, KMA, of the source QKD node may create the source cipher by xoring the KSA key with a KMA key provided by a key storage of the KMA and shared with a QKD node of the relaying path immediately following the source QKD node.

Correspondingly, a key management agent, KMA, of the target QKD node may recover the KSA key from the received target cipher by xoring the received target cipher with a KMA key provided by a key storage of the KMA and shared with a QKD node of the relaying path immediately preceding the target QKD node.

Another aspect of the invention is a quantum key distribution, QKD, network, QKDN, central cipher collector, CCC for a QKDN. The QKDN CCC is configured for receiving a transit cipher from a QKD node of the QKDN and creating an output cipher to be transmitted by xoring the received input cipher with the received transit cipher.

According to the invention, the QKDN CCC comprises a cipher storage for storing a plurality of transit ciphers and is configured for carrying out a method according to an embodiment of the invention together with a source QKD node, a transit QKD node, a target QKD node and a QKDN controller according to the invention of the QKDN. The QKDN CCC allows for relaying a KSA key very flexibly and for implementing the QKDN very economically.

A third aspect of the invention is a quantum key distribution, QKD, network, QKDN, controller, for a QKDN. The QKDN controller is configured for controlling each QKD node and the QKDN CCC. In other words, the QKDN controller determines an operation of the QKDN, particularly a KSA key relay operation of the QKDN.

According to the invention, the QKDN controller is configured for carrying out a method according to an embodiment of the invention together with a source QKD node, a transit QKD node, a target QKD node and a QKDN central cipher collector, CCC, according to the invention of the QKDN. The QKDN CCC allows for relaying a KSA key very flexibly and for implementing the QKDN very economically.

A fourth aspect of the invention is a quantum key distribution, QKD, network, QKDN, comprising a plurality of QKD nodes, a QKDN controller and a QKDN central cipher collector, CCC. The QKDN is configured for relaying a KSA key from a source QKD node to a target QKD node. The QKDN defines a quantum communication infrastructure, QCI.

According to the invention, the QKDN CCC is configured according to an embodiment the invention and the QKDN controller is configured according to an embodiment of the invention. The QKDN allows for relaying a KSA key very flexibly and for implementing the QKDN very economically.

The QKDN CCC is preferably linked to at least three QKD nodes via a respective key management agent, KMA, link. The QKDN CCC is allowed for receiving an input cipher via a first KMA link, for receiving a transit cipher via a second KMA link and for transmitting the output cipher via a third KMA link. In other words, the QKDN CCC is enabled to bypass at least one transit QKD node, i.e. allows the KSA key for bypassing at least one transit QKD node.

Of course the QKDN CCC, the QKDN controller and, hence, the QKDN may be configured for additionally carrying out each method known from the specification ITU-T Y.3803 mentioned above, i.e., for relaying a KSA key exclusively via QKD nodes of the QKDN, i.e., by means of in-path conversions, or exclusively via the QKDN CCC of the QKDN, i.e., by means of off-path conversions. Thus, it shall be understood that the inventive QKDN controller and the inventive QKDN CCC are substantially different from the respective counterparts known from ITU-T Y.3803.

A fifth aspect of the invention is a QKDN system, comprising a plurality of QKDNs according to an embodiment of the invention. The QKDN system shall, hence, be understood as a system combining a plurality of different and separate QKDNs. In other words, each QKDN is a subsystem of the QKDN system.

For instance, each QKDN may be a QKDN of a member state of the European Union, i.e., a national QCI, NatQCI. Accordingly, the QKDN system may be referred to as an EuroQCI.

According to the invention, the QKDN system comprises a system CCC linked to QKDN CCCs of at least three QKDNs via a respective key management agent, KMA, link and a system controller operationally linked to the system CCC. Here, the term "KMA link" is used in analogy as it is used for transmitting and receiving ciphers comprising at least one KMA key although the KMA link is not linked to a KMA of a QKD node of a QKDN. The system controller operationally corresponds to a QKDN controller. The system CCC operationally corresponds to a QKDN CCC. The QKDNs of the QKDN system logically correspond to QKD nodes of a QKDN.

Thus, the system controller and the system CCC form a superordinate layer for relaying a KSA key from a source QKDN to a target QKDN, i.e., more precisely from a source QKD node of the source QKDN to a target QKD node of the target QKDN. Topological structures of the QKDNs are hidden for the system CCC and, hence, for the superordinate layer by the QKDN CCCs.

In case the QKDN system is a EuroQCI, the system controller may be referred to as a Euro controller and the system CCC may be referred to as a Euro CCC. The Euro controller and the Euro CCC allow for relaying a KSA key from a first NatQCI to a second NatQCI different from the first NatQCI without any topological knowledge of the first NatQCI and the second NatQCI.

Of course, the inventive method may also be carried out in analogy, i.e., converting a source cipher into a target cipher comprises at least two cipher conversions, the at least two cipher conversions comprising an in-path cipher conversion carried out by a QKDN CCC of a superordinate relaying path within the QKDN system, the superordinate relaying path connecting a target QKDN to a source QKDN, and an off-path cipher conversion carried out by the system CCC instead of the QKDN CCC.

Moreover, the system CCC, the system controller and, hence, the QKDN system may be configured for additionally carrying out each method known from the specification ITU-T Y.3803 mentioned above in analogy, i.e., for relaying a KSA key exclusively via QKDNs of the QKDN system, i.e., by means of in-path conversions, or exclusively via the system CCC of the QKDN system, i.e., by means of off-path conversions.

A sixth aspect of the invention is a computer program product, comprising a digital storage medium with a program code. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to an embodiment of the invention as the QKDN controller when being executed by a processor of the computing device. The computer program product enables the computing device to support relaying a KSA key very flexibly and for implementing the QKDN very economically.

A seventh aspect of the invention is a computer program product, comprising a digital storage medium with a program code. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to an embodiment of the invention as the QKDN CCC when being executed by a processor of the computing device. The computer program product enables the computing device to support relaying a KSA key very flexibly and for implementing the QKDN very economically.

An essential advantage of the inventive method is that a QKDN may be operated more flexibly and be implemented more economically. Further advantages of the inventive method are that it allows for a low transmission latency, a high flexibility in time, a real-time determination of relaying paths, a real-time avoidance of QKD nodes, an improved secrecy of a QKDN topology, a facilitated transmission billing and an integration of different QKDNs.

It shall be understood that the features described previously and to be described subsequently may be used not only in the indicated combinations but also in different combinations or on their own without leaving the scope of the present invention.

The invention is described in detail by means of exemplary embodiments and with reference to the accompanying drawings. Like components are indicated by like reference numerals throughout the drawings. Therein:
- Fig. 1: schematically shows a diagram of a QKDN according to an embodiment of the invention;
- Fig. 2: schematically shows a diagram of a QKDN according to an embodiment of the invention with a first exemplary cipher conversion path;
- Fig. 3: schematically shows a diagram of the QKDN shown in fig. 2 with a second exemplary cipher conversion path;
- Fig.4: schematically shows a diagram of a QKDN system according to an embodiment of the invention.

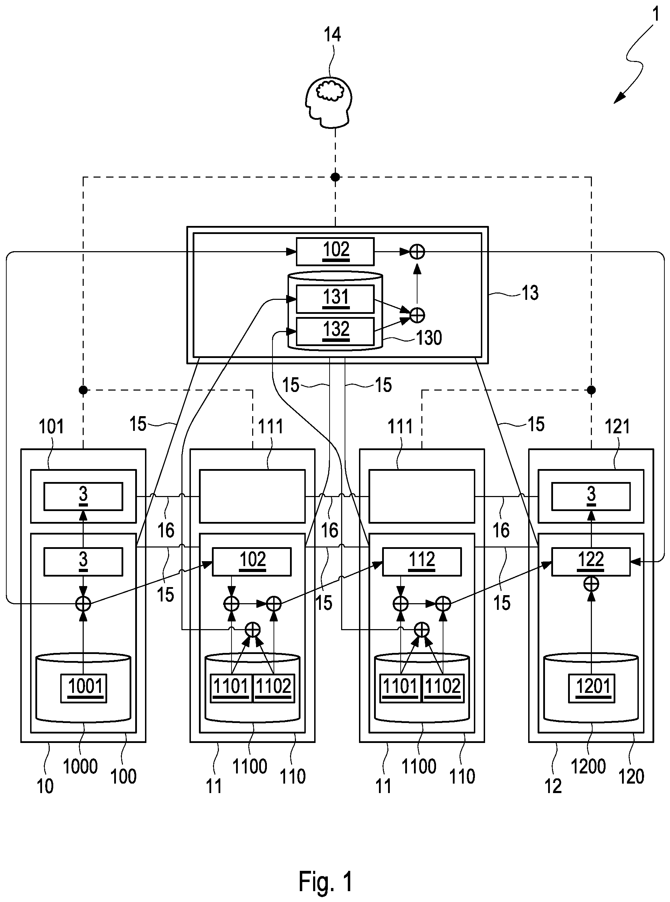

Fig. 1 schematically shows a diagram of a QKDN 1 according to an embodiment of the invention. The quantum key distribution, QKD, network, QKDN, 1 comprises a plurality of QKD nodes 10, 11, 12.

Each QKD node 10, 11, 12 comprises a respective key management agent, KMA, 100, 110, 120. Each KMA 100, 110, 120 comprises a respective key storage 1000, 1100, 1200 for storing and providing respective KMA keys 1001, 1101, 1102, 1201. KMAs 100, 110, 120 of pairs of adjacent QKD nodes 10, 11, 12 may be linked via respective KMA links 15.

Each QKD node 10, 11, 12 further comprises a key supply agent, KSA, 101, 111, 121 for providing encryption applications (not shown) with KSA keys 3. A QKD node 10, 11, 12 may be linked to a node of a communication network, the node executing the encryption application. KSAs 101, 11, 121 of pairs of adjacent QKD nodes 10, 11, 12 may be linked via respective KSA links 16.

Each QKD node 10, 11, 12 may further comprise a respective QKD module (not shown) for creating and providing the KMA keys 1001, 1101, 1102, 1201 to be stored by the respective key storages 1000, 1100, 1200. The QKD module may also create and provide the KSA key 3. Alternatively the KSA key 3 may be created and provided otherwise.

The QKDN 1 exemplarily comprises four QKD nodes 10, 11, 12 in a linear arrangement, the four QKD nodes 10, 11, 12 comprise a source QKD node 10 and a target QKD node 12 connected to the source QKD node 10 via a single relaying path comprising two transit QKD nodes 11. The simple structure of the QKDN 1 only facilitates understanding the invention. Hence, the invention is not restricted to the exemplary QKDN 1.

Generally, the QKDN comprises a large plurality of QKD nodes forming a mesh of QKD nodes. Each QKD node of the mesh may be the source QKD node or the target QKD node. For each source QKD node and target QKD node, the mesh generally comprises a plurality of different relaying paths connecting the target QKD node to the source QKD node, the QKD nodes of a respective relaying path being the transit QKD nodes of the respective relaying path.

The QKDN 1 further comprises a QKDN central cipher collector, CCC, 13 according to an embodiment of the invention for the QKDN 1. The QKDN CCC 13 comprises a cipher storage 130 for storing a plurality of transit ciphers 131, 132. The QKDN CCC 13 may be linked to a plurality of KMAs 100, 110, 112 or each KMA 100, 110, 120 via respective KMA links 15. However, the QKDN CCC 13 is linked to at least three QKD nodes 10, 11, 12 via respective KMA links 15.

Despite the simple structure, the QKDN 1 comprises four possible conversion paths, namely a first conversion path comprising both transit QKD nodes 11, a second conversion path comprising the QKD node 11 immediately linked to the source QKD node 11 and the QKDN CCC 13, a third conversion path comprising the QKDN CCC 13 and the transit QKD node 11 immediately linked to the target QKD node 12, and a fourth conversion path comprising only the QKDN CCC 13.

The QKDN 1 also comprises a QKDN controller 14 according to an embodiment of the invention for the QKDN 1. The QKDN controller 14 is operationally linked to each QKD node 10, 11, 12 and to the QKDN CCC 13.

The QKDN CCC 13 is configured for carrying out a method according to an embodiment of the invention together with the source QKD node 10, the transit QKD node 11, the target QKD node 12 and the QKDN controller 14 of the QKDN 1. The QKDN controller 14 is configured for carrying out the inventive method together with the source QKD node 10, the transit QKD node 11, the target QKD node 12 and the QKDN CCC 13 of the QKDN 1.

The QKDN controller 14 may be implemented by means of a computer program product, comprising a digital storage medium with a program code. The program code causes a computing device to carry out the inventive method as the QKDN controller 14 when being executed by a processor of the computing device.

Of course, the QKDN CCC 13, may be implemented by means of another computer program product comprising a digital storage medium with a program code. The program code causes a computing device to carry out the inventive method as the QKDN CCC 13 when being executed by a processor of the computing device.

The method is carried out for relaying a key supply agent, KSA, key 3 within the quantum key distribution, QKD, network, QKDN, 1.

The source QKD node 10 of the QKDN 1 transmits the KSA key 3 as a source cipher 102 via the QKDN 1 to the target QKD node 12 of the QKDN 1. The key management agent, KMA, 100 of the source QKD node 10 may create the source cipher 102 by xoring the KSA key 3 with a KMA key 1001 provided by a key storage 1000 of the KMA 100 and shared with a QKD node of a relaying path immediately following the source QKD node 10, here exemplarily the left transit QKD node 11, the relaying path connecting the target QKD node 12 to the source QKD node 10.

The QKDN 1 converts the source cipher 102 into a target cipher 122. Converting the source cipher 102 into the target cipher 122 comprises at least two cipher conversions. The at least two conversions comprise an off-path cipher conversion carried out by a QKDN central cipher collector, CCC, 13 instead of the transit QKD node 11.

In the off-path cipher conversion, the QKDN CCC, 13, receives the KSA key 3 as an input cipher from a QKD node of the relaying path immediately preceding the transit QKD node 11, here exemplarily the source QKD node 10. Then, the QKDN CCC 13 creates an intermediate cipher 112 as an output cipher by xoring the received input cipher with a transit cipher 131, 132 provided by a cipher storage 130 of the QKDN CCC 13 and received from the transit QKD node 11.

The KMA 110 of the transit QKD node 11 may create the transmitted transit cipher 131, 132 by xoring a KMA key 1101 provided by the key storage 1100 of the KMA 110 and shared with the immediately preceding QKD node with a KMA key 1102 provided by the key storage 1100 and shared with the immediately following QKD node.

The QKDN CCC 13 may create the transit cipher as a multi-hop transit cipher by xoring a sequence of transit ciphers 131, 132 provided by the cipher storage 130 and received from a plurality of subsequent transit QKD nodes 11 of the relaying path.

Preferably, the transit QKD node 11 transmits the transit cipher 131, 132 to the QKDN CCC 13 in advance without a time relation to the transmitted KSA key 3 and the QKDN CCC 13 stores the received transit cipher 131, 132 in the cipher storage 130 until the central cipher conversion is carried out. Advantageously, the QKDN CCC 13 may create the multi-hop transit cipher in advance without a time relation to the transmitted KSA key 3 and the QKDN CCC 13 stores the created multi-hop transit cipher in the cipher storage 130 until the central cipher conversion is carried out.

The QKDN CCC 13 finally transmits the created output cipher to a QKD node of the relaying path immediately following the transit QKD node 11, here exemplarily the target QKD node 12. The intermediate cipher 112 is the target cipher 122 in case the immediately following QKD node is the target QKD node 12.

The at least two cipher conversions further comprise an in-path cipher conversion carried out by a transit QKD node 11 of the relaying path within the QKDN 1.

In the in-path cipher conversion, each transit QKD node 11 may receive the KSA key 3 as an input cipher from a QKD node of the relaying path immediately preceding the transit QKD node 11, a KMA 110 of the transit QKD node 11 may recover the KSA key 3 from the received input cipher by xoring the received input cipher with a KMA key 1101 provided by a key storage 1100 of the KMA 110 and shared with the immediately preceding QKD node, create an intermediate cipher 112 as an output cipher by xoring the recovered KSA key 3 with a KMA key 1101 provided by the key storage 1100 of the KMA 110 and shared with a QKD node of the relaying path immediately following the transit QKD node 11 and transmit the created output cipher to the immediately following QKD node. The last intermediate cipher 112 is the target cipher 122 in case the immediately following QKD node is the target QKD node 12.

The target QKD node 12 receives the KSA key 3 as the target cipher 122. The key management agent, KMA, 120 of the target QKD node 12 may recover the KSA key 3 from the received target cipher 122 by xoring the received target cipher 122 with a KMA key 1201 provided by a key storage 1200 of the KMA 120 and shared with a QKD node of the relaying path immediately preceding the target QKD node 12, here exemplarily the right transit QKD node 11.

In a more complex QKDN, converting the source cipher 102 into the target cipher 122 usually comprises a plurality of subsequent in-path cipher conversions and/or a plurality of off-path cipher conversions when the relaying path comprises a plurality of transit QKD nodes 11.

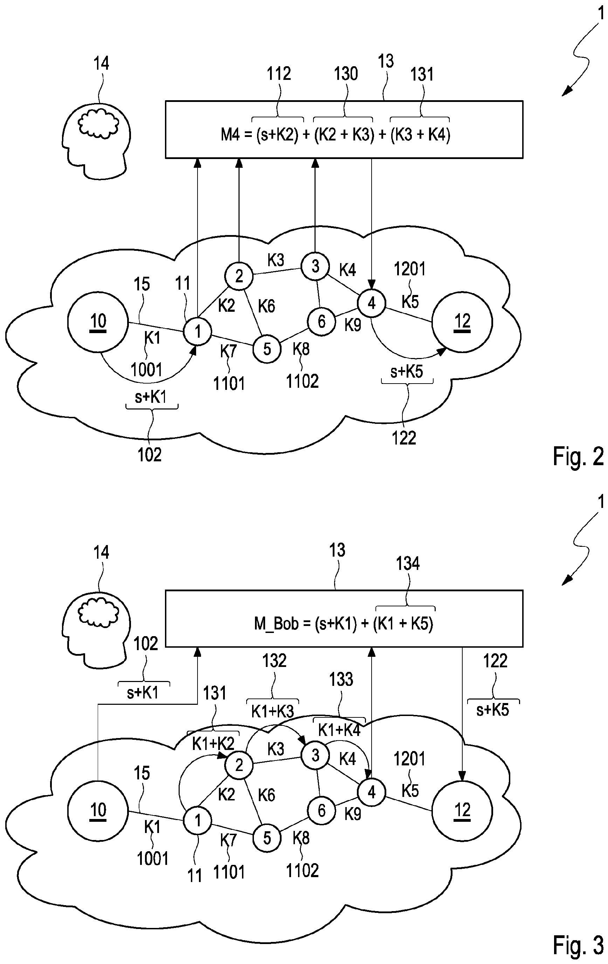

Fig. 2 schematically shows a diagram of a QKDN 1 according to an embodiment of the invention with a first exemplary cipher conversion path. The source QKD node 10 is named "Alice" and the target QKD node 12 is named "Bob". The transit QKD nodes 11 are named "1", "2", "3", "4", "5" and "6". All QKD nodes 10, 11, 12 are linked via KMA links 15. The KMA links 15 are named "K1", "K2", "K3", "K4", "K5", "K6", "K7", "K8" and "K9" wherein each KMA link name also names a KMA key 1001, 1101, 1102, 1201 shared by the respective QKD nodes linked by the KMA link 15. For instance, QKD nodes "1" and "2" are linked by the KMA link "K2" and share the KMA key "K2". The KSA key 3 is named "s".

The relaying path exemplarily comprises the transit QKD node "1", the transit QKD node "2", the transit QKD node "3" and the transit QKD node "4". In contrast, the cipher conversion path comprises the transit QKD node "1", the QKDN CCC 13 and the transit QKD node "4", i.e., the QKDN CCC 13 bypasses the transit QKD nodes "2" and "3".

"Alice" creates the source cipher 102 "s+K1" by xoring "s" with "K1" and transmits the created source cipher 102 "s+K1" to the transit QKD node "1". Hereinafter, the operator "+" indicates an XOR-combination.

The transit QKD node "1" receives the transmitted source cipher 102 "s+K1" as an input cipher and recovers the KSA key "s" by xoring the received input cipher "s+K1" with "K1". The transit QKD node "1" creates the intermediate cipher 112 "s+K2" as an output cipher by xoring the recovered KSA key "s" with the KMA key "K2" and transmits the created output cipher "s+K2" to the QKDN CCC 13.

The QKDN CCC 13 receives the transmitted output cipher "s+K2" as an input cipher and additionally receives transit ciphers "K2+K3" and "K3+K4" transmitted from the transit QKD nodes "2" and "3", respectively. The QKDN CCC 13 creates the output cipher "M4" by xoring the received input cipher "s+K2" with the received transit ciphers "K2+K3" and "K3+K4", the resulting output cipher "M4" yielding "s+K4" as the XOR operation is associative, i.e., allows for omitting brackets and introducing different brackets without affecting the result, e.g., "(s+K2)+(K2+K3)+(K3+K4)" equals "s+(K2+K2)+(K3+K3)+K4". Each of the differently introduced brackets yields a 0-cipher, the 0-cipher being the neutral element of the XOR operation. Accordingly, the QKDN CCC 13 transmits the created output cipher "s+K4" to the transit QKD node 4.

The transit QKD node "4" receives the transmitted output cipher "s+K4" as an input cipher and recovers the KSA key "s" by xoring the received input cipher "s+K4" with "K4". The transit QKD node "4" creates the output cipher "s+K5" by xoring the recovered KSA key "s" with "K5".

"Bob" receives the transmitted output cipher "s+K5" as the target cipher 122 and recovers the KSA key "s" by xoring the received target cipher 122 "s+K5" with "K5".

The cipher conversion path coincides with the relaying path at the ends of the relaying path and deviates from the relaying path in between.

Fig. 3 schematically shows a diagram of the QKDN 1 shown in fig. 2 with a second exemplary conversion path.

The cipher conversion path comprises the QKDN CCC 13 only, i.e., the QKDN CCC 13 bypasses the transit QKD nodes "1", "2", "3", "4" and "5".

"Alice" creates the source cipher 102 "s+K1" by xoring "s" with "K1" and transmits the created source cipher 102 "s+K1" to the QKDN CCC 13. The QKDN CCC 13 receives the transmitted source cipher 102 "s+K1" as an input cipher.

Independently, transit QKD node "1" creates a transit cipher 131 "K1+K2" as an output cipher by xoring the KMA key "K1" with the KMA key "K2" and transmits the output cipher to the transit QKD node "2".

The transit QKD node "2" receives the transmitted output cipher "K1+K2" as an input cipher, creates a transit cipher 132 "K1+K3" as an output cipher by xoring the received input cipher "K1+K2" with the transit cipher "K2+K3" and transmits the created output cipher "K1+K3" to the QKD node "3".

The transit QKD node "3" receives the transmitted output cipher "K1+K3" as an input cipher, creates a transit cipher 133 "K1+K4" as an output cipher by xoring the received input cipher "K1+K3" with the transit cipher "K3+K4" and transmits the created output cipher "K1+K4" to the QKD node "4".

The transit QKD node "4" receives the transmitted output cipher "K1+K4" as an input cipher, creates a transit cipher 134 "K1+K5" as an output cipher by xoring the received input cipher "K1+K4" with the transit cipher "K4+K5" and transmits the created output cipher "K1+K5" to the QKDN CCC 13.

The QKDN CCC 13 receives the output cipher "K1+K5" as a transit cipher and creates the output cipher "M_Bob" by xoring the received input cipher "s+K1" with the received transit cipher "K1+K5" and transmits the created output cipher "s+K5" to "Bob".

"Bob" receives the transmitted output cipher "s+K5" as the target cipher 122 and recovers the KSA key "s" by xoring the received target cipher 122 "s+K5" with "K5".

The cipher conversion does not coincide with the relaying path, i.e., completely deviates from the relaying path in between. Nonetheless, the conversion path comprises both in-path cipher conversions and an off-path cipher conversion.

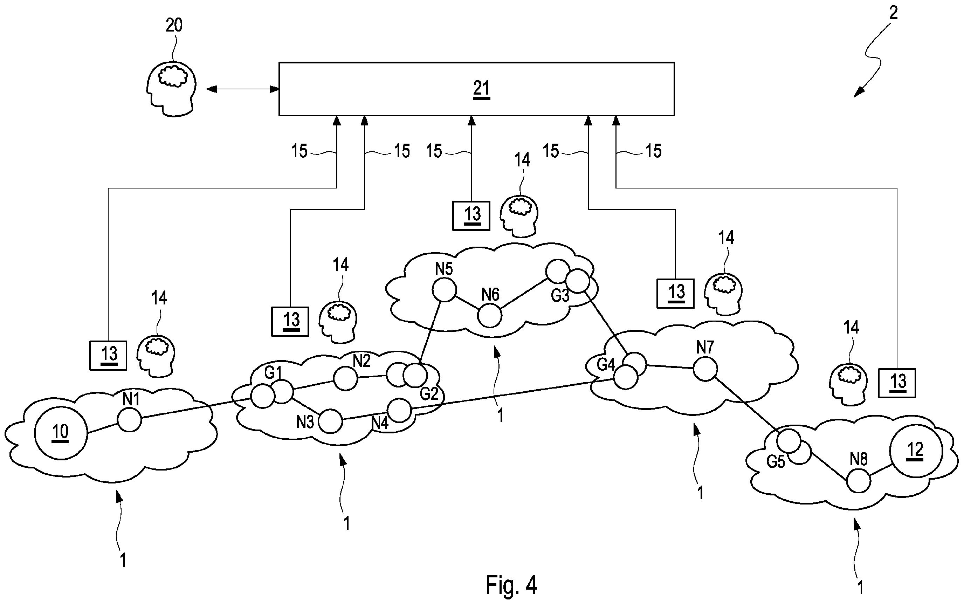

Fig. 4 schematically shows a diagram of a QKDN system 2 according to an embodiment of the invention. The QKDN system 2 comprises a plurality of QKDNs, a system CCC 21 linked to QKDN CCCs 13 of at least three QKDNs 1 via a respective key management agent, KMA, link 15 and a system controller 20 operationally linked to the system CCC 21. The QKDN system 2 may be a Euro QCI and the QKDNs 1 may be NatQCls.

A first QKDN 1 comprises a source QKD node 10 and a transit QKD node named "N1", a second QKDN 1 comprises transit QKD nodes named "N2, N3, N4" and gateway transit QKD nodes named "G1" and "G2", a third QKDN 1 comprises transit QKD nodes named "N5" and "N6" and a gateway transit QKD node named "G3", a fourth QKDN 1 comprises a transit QKD node named "N7" and a gateway transit QKD node named "G4" and a fifth QKDN 1 comprises a QKD node named "N8", a gateway QKD node named "G5" and a target QKD node 12.

The gateway transit QKD nodes "G1", "G2", "G3", "G4", "G5" are combinations of respective transit QKD nodes of two different QKDNs for linking the different QKDNs. Each gateway transit QKD node "G1", "G2", "G3", "G4", "G5" may be physically located within one QKDN of the different QKDNs or within another QKDN of the different QKDNs. The physical location of a gateway transit QKD node "G1", "G2", "G3", "G4", "G5" may be determined depending on a national requirement or law in case the two different QKDNs are NatQCls of different member states of the European Union.

It is noted that each QKDN 1 may comprise a border transit QKD node, the border transit QKD node linking the QKDN 1 to another QKDN 1, e.g., the transit QKD node "N1" is a border transit QKD node of the leftmost QKDN 1, the gateway transit QKD nodes "G1", "G2" and the transit QKD node N4 are border transit QKD nodes of the second left QKDN 1, the transit QKD node "N5" and the gateway transit QKD node "G3" are border transit QKD nodes of the middle QKDN 1, the gateway transit QKD node "G4" and the transit QKD node "N7" are border transit QKD nodes of the second right QKDN 1 and the gateway transit QKD node "G5" is a border transit QKD node of the rightmost QKDN 1.

Each QKDN CCC 13 of a QKDN 1 may be configured to transmit a QKDN bypass transit cipher to the system CCC 21, the QKDN bypass transit cipher corresponding to a cipher conversion path between border transit QKD nodes of the QKDN 1, i.e., a partial cipher conversion path of a complete cipher conversion path, and hiding a topological structure of the respective QKDN 1 from the system CCC 21.

The QKDN bypass transit cipher may be transmitted to the system CCC 21 together with a fee indicator related to a relaying path within the QKDN 1, thus, allowing the system CCC 21 for minimizing a relaying fee of a complete cipher conversion path from the source QKD node 10 to the target QKD node 12 in case there are different alternative relaying paths within the QKDN system, the different alternative relaying paths involving different QKDNs 1 of the QKDN system.

### Reference Numerals

- 1: quantum key distribution network, QKDN
- 10: source QKD node, Alice node
- 100: key management agent, KMA
- 1000: key storage
- 1001: KMA key
- 101: key supply agent, KSA
- 102: source cipher
- 11: transit QKD node
- 110: key management agent, KMA
- 1100: key storage
- 1101: KMA key
- 1102: KMA key
- 111: key supply agent, KSA
- 112: intermediate cipher
- 12: target QKD node, Bob node
- 120: key management agent, KMA
- 1200: key storage
- 1201: KMA key
- 121: key supply agent, KSA
- 122: target cipher
- 13: QKDN central cipher collector, CCC
- 130: cipher storage
- 131: transit cipher
- 132: transit cipher
- 133: transit cipher
- 134: transit cipher
- 14: QKDN controller
- 15: KMA link
- 16: KSA link
- 2: QKDN system
- 20: system controller
- 21: system CCC
- 3: KSA key

## Claims

1. A method of relaying a key supply agent, KSA, key (3) within a quantum key distribution, QKD, network, QKDN, (1), wherein, controlled by a QKDN controller (14) of the QKDN,
- a source QKD node (10) of a QKDN (1) transmits a KSA key (3) as a source cipher (102) via the QKDN (1) to a target QKD node (12) of the QKDN (1) and the target QKD node (12) receives the KSA key (3) as a target cipher (122), the QKDN (1) converting the source cipher (102) into the target cipher (122);
- converting the source cipher (102) into the target cipher (122) comprises at least two cipher conversions, the at least two cipher conversions comprising an in-path cipher conversion carried out by a transit QKD node (11) of a relaying path within the QKDN (1), the relaying path connecting the target QKD node (12) to the source QKD node (10), and an off-path cipher conversion carried out by a QKDN central cipher collector, CCC, (13) instead of the transit QKD node (11).

2. The method according to claim 1, wherein the QKDN CCC, (13) in the off-path cipher conversion, receives the KSA key (3) as an input cipher from a QKD node of the relaying path immediately preceding the transit QKD node (11), creates an output cipher by xoring the received input cipher with a transit cipher (131, 132) provided by a cipher storage (130) of the QKDN CCC (13) and received from the transit QKD node (11) and transmits the created output cipher to a QKD node of the relaying path immediately following the transit QKD node (11).

3. The method according to claim 2, wherein a key management agent, KMA, (110) of the transit QKD node (11) creates the transmitted transit cipher (131, 132) by xoring a KMA key (1101) provided by a key storage (1100) of the KMA (110) and shared with the immediately preceding QKD node with a KMA key (1101) provided by the key storage (1100) and shared with the immediately following QKD node.

4. The method according to claim 2 or 3, wherein the transit QKD node (11) transmits the transit cipher (131, 132) to the QKDN CCC (13) in advance without a time relation to the transmitted KSA key (3) and the QKDN CCC (13) stores the received transit cipher in the cipher storage (130) until the central cipher conversion is carried out.

5. The method according to one of claims 2 to 4, wherein converting the source cipher (102) into the target cipher (122) comprises a plurality of successive in-path cipher conversions and/or a plurality of successive off-path cipher conversions when the relaying path comprises a plurality of transit QKD nodes (11).

6. The method according to claim 5, wherein the QKDN CCC (13) creates the transit cipher as a multi-hop transit cipher by xoring a sequence of transit ciphers (131, 132) provided by the cipher storage (130) and received from a plurality of subsequent transit QKD nodes (11) of the relaying path.

7. The method according to claim 6, wherein the QKDN CCC (13) creates the multi-hop transit cipher in advance without a time relation to the transmitted KSA key (3) and the QKDN CCC (13) stores the created multi-hop transit cipher in the cipher storage (130) until the central cipher conversion is carried out.

8. The method according to one of claims 1 to 7, wherein each transit QKD node (11), in the in-path cipher conversion, receives the KSA key (3) as an input cipher from a QKD node of the relaying path immediately preceding the transit QKD node (11), a KMA (110) of the transit QKD node (11) recovers the KSA key (3) from the received input cipher by xoring the received input cipher with a KMA key (1101) provided by a key storage (1100) of the KMA (110) and shared with the immediately preceding QKD node, creates an output cipher by xoring the recovered KSA key (3) with a KMA key (1102) provided by the key storage (1100) of the KMA (110) and shared with a QKD node of the relaying path immediately following the transit QKD node (11) and transmits the created output cipher to the immediately following QKD node.

9. The method according to one of claims 1 to 8, wherein a key management agent, KMA, (100) of the source QKD node (10) creates the source cipher (102) by xoring the KSA key (3) with a KMA key (1001) provided by a key storage (1000) of the KMA (100) and shared with a QKD node of the relaying path immediately following the source QKD node (10) and/or wherein a key management agent, KMA, (120) of the target QKD node (12) recovers the KSA key (3) from the received target cipher (122) by xoring the received target cipher (122) with a KMA key (1201) provided by a key storage (1200) of the KMA (120) and shared with a QKD node of the relaying path immediately preceding the target QKD node (12).

10. A quantum key distribution, QKD, network, QKDN, central cipher collector, CCC, (13) for a QKDN (1), comprising a cipher storage (130) for storing a plurality of transit ciphers (131, 132) and configured for carrying out a method according to one of claims 1 to 9 together with a source QKD node (10), a transit QKD node (11), a target QKD node (12) and a QKDN controller (14) according to claim 11 of the QKDN (1).

11. A quantum key distribution, QKD, network, QKDN, controller (14) for a QKDN (1), configured for carrying out a method according to one of claims 1 to 9 together with a source QKD node (10), a transit QKD node (11), a target QKD node (12) and a QKDN central cipher collector, CCC, (13) according to claim 10 of the QKDN.

12. A quantum key distribution, QKD, network, QKDN, (1) comprising a plurality of QKD nodes (10, 11, 12), a QKDN central cipher collector, CCC, (13) according to claim 10 and a QKDN controller (14) according to claim 11.

13. The QKDN according to claim 12, wherein the QKDN CCC (13) is linked to at least three QKD nodes (10, 11, 12) via a respective key management agent, KMA, link (15).

14. A QKDN system (2), comprising a plurality of QKDNs (1) according to claim 12 or 13, a system CCC (21) linked to QKDN CCCs (13) of at least three QKDNs (1) via a respective key management agent, KMA, link (15) and a system controller (20) operationally linked to the system CCC (21).

15. A computer program product, comprising a digital storage medium with a program code, the program code causing a computing device to carry out a method according to one of claims 1 to 9 as the QKDN controller (14) when being executed by a processor of the computing device.

## Amended claims

### Amended claims in accordance with Rule 137(2) EPC.

1. A method of relaying a key supply agent, KSA, key (3) within a quantum key distribution, QKD, network, QKDN, (1), wherein, controlled by a QKDN controller (14) of the QKDN,
- a source QKD node (10) of a QKDN (1) transmits a KSA key (3) as a source cipher (102) via the QKDN (1) to a target QKD node (12) of the QKDN (1) and the target QKD node (12) receives the KSA key (3) as a target cipher (122), the QKDN (1) converting the source cipher (102) into the target cipher (122);
- converting the source cipher (102) into the target cipher (122) comprises at least two cipher conversions, the at least two cipher conversions comprising an in-path cipher conversion carried out by a transit QKD node (11) of a relaying path within the QKDN (1), the relaying path connecting the target QKD node (12) to the source QKD node (10), and an off-path cipher conversion carried out by a QKDN central cipher collector, CCC, (13) instead of the transit QKD node (11).

2. The method according to claim 1, wherein the QKDN CCC, (13) in the off-path cipher conversion, receives the KSA key (3) as an input cipher from a QKD node of the relaying path immediately preceding the transit QKD node (11), creates an output cipher by xoring the received input cipher with a transit cipher (131, 132) provided by a cipher storage (130) of the QKDN CCC (13) and received from the transit QKD node (11) and transmits the created output cipher to a QKD node of the relaying path immediately following the transit QKD node (11).

3. The method according to claim 2, wherein a key management agent, KMA (110) of the transit QKD node (11) creates the transmitted transit cipher (131, 132) by xoring a KMA key (1101) provided by a key storage (1100) of the KMA (110) and shared with the immediately preceding QKD node with a KMA key (1101) provided by the key storage (1100) and shared with the immediately following QKD node.

4. The method according to claim 2 or 3, wherein the transit QKD node (11) transmits the transit cipher (131, 132) to the QKDN CCC (13) in advance without a time relation to the transmitted KSA key (3) and the QKDN CCC (13) stores the received transit cipher in the cipher storage (130) until the central cipher conversion is carried out.

5. The method according to one of claims 2 to 4, wherein converting the source cipher (102) into the target cipher (122) comprises a plurality of successive in-path cipher conversions and/or a plurality of successive off-path cipher conversions when the relaying path comprises a plurality of transit QKD nodes (11).

6. The method according to claim 5, wherein the QKDN CCC (13) creates the transit cipher as a multi-hop transit cipher by xoring a sequence of transit ciphers (131, 132) provided by the cipher storage (130) and received from a plurality of subsequent transit QKD nodes (11) of the relaying path.

7. The method according to claim 6, wherein the QKDN CCC (13) creates the multi-hop transit cipher in advance without a time relation to the transmitted KSA key (3) and the QKDN CCC (13) stores the created multi-hop transit cipher in the cipher storage (130) until the central cipher conversion is carried out.

8. The method according to one of claims 1 to 7, wherein each transit QKD node (11), in the in-path cipher conversion, receives the KSA key (3) as an input cipher from a QKD node of the relaying path immediately preceding the transit QKD node (11), a KMA (110) of the transit QKD node (11) recovers the KSA key (3) from the received input cipher by xoring the received input cipher with a KMA key (1101) provided by a key storage (1100) of the KMA (110) and shared with the immediately preceding QKD node, creates an output cipher by xoring the recovered KSA key (3) with a KMA key (1102) provided by the key storage (1100) of the KMA (110) and shared with a QKD node of the relaying path immediately following the transit QKD node (11) and transmits the created output cipher to the immediately following QKD node.

9. The method according to one of claims 1 to 8, wherein a key management agent, KMA, (100) of the source QKD node (10) creates the source cipher (102) by xoring the KSA key (3) with a KMA key (1001) provided by a key storage (1000) of the KMA (100) and shared with a QKD node of the relaying path immediately following the source QKD node (10) and/or wherein a key management agent, KMA, (120) of the target QKD node (12) recovers the KSA key (3) from the received target cipher (122) by xoring the received target cipher (122) with a KMA key (1201) provided by a key storage (1200) of the KMA (120) and shared with a QKD node of the relaying path immediately preceding the target QKD node (12).

10. A quantum key distribution, QKD, network, QKDN, central cipher collector, CCC, (13) for a QKDN (1), comprising a cipher storage (130) for storing a plurality of transit ciphers (131, 132) and configured for carrying out a method according to one of claims 1 to 9 together with a source QKD node (10), a transit QKD node (11), a target QKD node (12) and a QKDN controller (14) of the QKDN (1).

11. A quantum key distribution, QKD, network, QKDN, controller (14) for a QKDN (1), configured for carrying out a method according to one of claims 1 to 9 together with a source QKD node (10), a transit QKD node (11), a target QKD node (12) and a QKDN central cipher collector, CCC, (13) of the QKDN.

12. A quantum key distribution, QKD, network, QKDN, (1) comprising a plurality of QKD nodes (10, 11, 12), a QKDN central cipher collector, CCC, (13) according to claim 10 and a QKDN controller (14) according to claim 11.

13. The QKDN according to claim 12, wherein the QKDN CCC (13) is linked to at least three QKD nodes (10, 11, 12) via a respective key management agent, KMA, link (15).

14. A QKDN system (2), comprising a plurality of QKDNs (1) according to claim 12 or 13, a system CCC (21) linked to QKDN CCCs (13) of at least three QKDNs (1) via a respective key management agent, KMA, link (15) and a system controller (20) operationally linked to the system CCC (21).

15. A computer program product, comprising a digital storage medium with a program code, the program code causing a computing device to carry out a method according to one of claims 1 to 9 as the QKDN controller (14) when being executed by a processor of the computing device.
